# EUROPEAN PATENT SPECIFICATION

(11) **EP 1 527 371 B1**
(45) Date of publication and mention of the grant of the patent: **03.10.2012**
(21) Application number: 03788333.7
(22) Date of filing: 06.08.2003
(51) Int. Cl.: G02F 1/167

(54) **PROTECTION OF ELECTRO-OPTIC DISPLAYS AGAINST THERMAL EFFECTS**
SCHUTZ ELEKTROOPTISCHER ANZEIGEVORRICHTUNGEN VOR THERMISCHEN EINFLÜSSEN
PROTECTION CONTRE DES EFFETS THERMIQUES POUR SYSTEMES D'AFFICHAGE ELECTRO-OPTIQUES

(30) Priority: 06.08.2002 US 319450 P
(43) Date of publication of application: 04.05.2005
(73) Proprietor: E Ink Corporation, Cambridge, MA 02138-1002 (US)
(72) Inventor: DANNER, Guy M., Somerville, MA 02143 (US); WEBBER, Richard M., Brookline, MA 02445 (US); PAOLINI, Richard J., Arlington, MA 02476 (US); ZHANG, Libing, Sharon, MA 02067 (US)
(74) Representative: Cole, David John
(86) International application number: PCT/US2003/024553
(87) International publication number: WO 2004/017135

(56) References cited:
- EP-A- 1 162 496
- US-B1- 6 177 947
- US-B1- 6 392 786
- US-B1- 6 400 571

## Description

This invention relates to protection of electro-optic displays against thermal effects. More specifically, this invention relates to methods for shielding electro-optic media against heat generated in electronic components located adjacent the media.

Electro-optic displays comprise a layer of electro-optic material, a term which is used herein in its conventional meaning in the art to refer to a material having first and second display states differing in at least one optical property, the material being changed from its first to its second display state by application of an electric field to the material. The optical property is typically color perceptible to the human eye, but may be another optical property, such as optical transmission, reflectance, luminescence or, in the case of displays intended for machine reading, pseudo-color in the sense of a change in reflectance of electromagnetic wavelengths outside the visible range.

One type of electro-optic display is a rotating bichromal member type as described, for example, in U.S. Patents Nos. 5,808,783; 5,777,782; 5,760,761; 6,054,071 6,055,091; 6,097,531; 6,128,124; 6,137,467; and 6,147,791 (although this type of display is often referred to as a "rotating bichromal ball" display, the term "rotating bichromal member" is preferred as more accurate since in some of the patents mentioned above the rotating members are not spherical). Such a display uses a large number of small bodies (typically spherical or cylindrical) which have two or more sections with differing optical characteristics, and an internal dipole. These bodies are suspended within liquid-filled vacuoles within a matrix, the vacuoles being filled with liquid so that the bodies are free to rotate. The appearance of the display is changed to applying an electric field thereto, thus rotating the bodies to various positions and varying which of the sections of the bodies is seen through a viewing surface.

Another type of electro-optic medium is an electrochromic medium, for example an electrochromic medium in the form of a nanochromic film comprising an electrode formed at least in part from a semi-conducting metal oxide and a plurality of dye molecules capable of reversible color change attached to the electrode; see, for example O'Regan, B., et al., Nature 1991, 353, 737; and Wood, D., Information Display, 18(3), 24 (March 2002). See also Bach, U., et al., Adv. Mater., 2002, 14(11), 845. Nanochromic films of this type are also described, for example, in U.S. Patent No. 6,301,038, International Application Publication No. WO 01/27690, and in copending Application Serial No. 10/249,128, filed March 18,2003.

Another type of electro-optic display, which has been the subject of intense research and development for a number of years, is the particle-based electrophoretic display, in which a plurality of charged particles move through a suspending fluid under the influence of an electric field. Electrophoretic displays can have attributes of good brightness and contrast, wide viewing angles, state bistability, and low power consumption when compared with liquid crystal displays. Nevertheless, problems with the long-term image quality of these displays have prevented their widespread usage. For example, particles that make up electrophoretic displays tend to settle, resulting in inadequate service-life for these displays.

Numerous patents and applications assigned to or in the names of the Massachusetts Institute of Technology (MIT) and E Ink Corporation have recently been published describing encapsulated electrophoretic media. Such encapsulated media comprise numerous small capsules, each of which itself comprises an internal phase containing electrophoretically-mobile particles suspended in a liquid suspension medium, and a capsule wall surrounding the internal phase. Typically, the capsules are themselves held within a polymeric binder to form a coherent layer positioned between two electrodes. Encapsulated media of this type are described, for example, in U.S. Patents Nos. 5,930,026; 5,961,804; 6,017,584; 6,067,185; 6,118,426; 6,120,588; 6,120,839; 6,124,851; 6,130,773; 6,130,774; 6,172,798; 6,177,921; 6,232,950; 6,249,721; 6,252,564; 6,262,706; 6,262,833; 6,300,932; 6,312,304; 6,312,971; 6,323,989; 6,327,072; 6,376,828; 6,377,387; 6,392,785; 6,392,786; 6,413,790; 6,422,687; 6,445,374; 6,445,489; 6,459,418; 6,473,072; 6,480,182; 6,498,114; 6,504,524; 6,506,438; 6,512,354; 6,515,649; 6,518,949; 6,521,489; 6,531,997; 6,535,197; 6,538,801; 6,545,291; and 6,580,545; and U.S. Patent Applications Publication Nos. 2002/0019081; 2002/0021270; 2002/0053900; 2002/0060321; 2002/0063661; 2002/0063677; 2002/0090980; 2002/0106847; 2002/0113770; 2002/0130832; 2002/0131147; 2002/0145792; 2002/0171910; 2002/0180687; 2002/0180688; 2002/0185378; 2003/0011560; 2003/0011867; 2003/0011868; 2003/0020844; 2003/0025855; 2003/0034949; 2003/0038755; 2003/0053189; 2003/0076573; 2003/0096113 and 2003/0102858; and International Applications Publication Nos. WO 99/67678; WO 00/05704; WO 00/20922; WO 00/38000; WO 00/38001; WO 00/36560; WO 00/67110; WO 00/67327; WO 01/07961; and WO 01/08241.

Many of the aforementioned patents and applications recognize that the walls surrounding the discrete microcapsules in an encapsulated electrophoretic medium could be replaced by a continuous phase, thus producing a so-called polymer-dispersed electrophoretic display in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned 2002/0131147. Accordingly, for purposes of the present application, such polymer-dispersed electrophoretic media are regarded as subspecies of encapsulated electrophoretic media.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; and other similar techniques.) Thus, the resulting display can be flexible. Further, because the display medium can be printed (using a variety of methods), the display itself can be made inexpensively.

A related type of electrophoretic display is a so-called "microcell electrophoretic display". In a microcell electrophoretic display, the charged particles and the suspending fluid are not encapsulated within microcapsules but instead are retained within a plurality of cavities formed within a carrier medium, typically a polymeric film. See, for example, International Application Publication No. WO 02/01281, and published US Application No. 2002/0075556, both assigned to Sipix Imaging, Inc.

The optical characteristics of most electro-optic media vary significantly with temperature. For example, the electrical resistivity of an encapsulated electrophoretic medium varies inversely with temperature, decreasing as the temperature increases. This variation of electrical resistivity with temperature affects how much current passes through the medium when it is driven with a constant drive pulse, and this is turn affects the rate at which the medium switches. Encapsulated electrophoretic media are typically capable of achieving gray scale, and in such gray scale media, thermal variation of the switching rate can have the serious side effect of distorting gray scale. For example, consider a medium capable of 16 gray levels. An impulse which would switch a pixel of the medium from gray level 0 (black) to gray level 8 (a middle shade of gray) when applied at 20°C might switch the pixel from gray level 0 to gray level 10 (a substantial lighter shade of gray than level 8) when applied at 40°C. Such changes in gray levels are readily perceived by the human eye.

Similar problems are encountered with other types of electro-optic media. For example, the switching characteristics of rotating bichromal member media will vary with temperature due to changes with temperature in the viscosity of the liquid medium which surrounds the rotating bichromal members, and such temperature-dependent changes may affect the gray scale of the medium.

The problems caused by temperature changes in electro-optic media are exacerbated if the temperature of the display becomes non-uniform, since the switching characteristics, and the gray scale "drift" discussed above, will then vary from point to point within the display. The human eye is much more sensitive to gray scale variations within a display than to a uniform drift in gray scale of the whole display.

Unfortunately, it is often necessary or desirable to mount electro-optic media in close proximity to heat generating components. Electro-optic displays often require substantial amounts of electrical circuitry. For example, high resolution electro-optic displays typically use an active matrix drive scheme in which the electro-optic medium is sandwiched between two sets of electrodes, namely a common transparent front plane electrode which covers the face of the display seen by an observer, and a matrix of pixel electrodes "behind" the electro-optic medium. Each of the pixel electrodes defines one pixel of the display and is associated with a non-linear element (typically a thin film transistor). The non-linear elements, in combination with row and column electrodes, control the voltages applied to the pixel electrodes, and thus the image produced on the display Such an active matrix display requires numerous row and column drivers, and other circuitry, to control the operation of the large number of non-linear elements, for example 480,000 in an 800 x 600 display. In portable apparatus, it is necessary to keep the display as compact as possible, and to this end, if the electro-optic medium is of a reflective type (i.e., if the electro-optic medium forms an image by reflection of incident light, rather than by transmission of light through the electro-optic medium) the electronic circuitry is usually mounted behind the visible portion of the display, thus essentially keeping the size of the display to that of the display area itself, plus a small surround. "Rear mounting" the electronic circuitry behind the visible display in this manner does not have any adverse effect on the displayed image, since reflective electro-optic media, such as the rotating bichromal member, electrochromic, and particle-based electrophoretic media already described, are essentially opaque and hence hide the electronic circuitry from an observer viewing the display. (Such rear mounting of electronic circuitry is of course not possible in displays using transmissive electro-optic media, such as conventional liquid crystals, since the electronic circuitry would be visible as shadows or dark areas on the display.) However, rear mounting the electronic circuitry leads to heat flow from heat generating components (such as logic chips and perhaps batteries) to the electro-optic medium, thus causing non-uniform heating of the medium, with the aforementioned deleterious effects on image quality.

EP 1 162 496 A1 describes an image recording medium capable of recording and erasing repeatedly, along with a recording and erasing apparatus and an image recording method. The recording medium is made from a large number of fine coloring particles, which are responsive to an electromagnetic field, and a supporting medium in which the particles are dispersed and which is preferably non-fluid at room temperature and fluidic at higher temperatures. The particles are driven by the field within the fluidized supporting medium so as to rotate and/or move to form an image, and the formed image is frozen after being cooled to room temperature. The supporting medium may be whitened by a mixture of finer white particles.

US 6 177 947 describes apparatus for forming an image, comprising a storage for a digitized image and a receiver. The receiver includes a matrix, a thermomeltable material disposed in the matrix having a transition temperature above room temperature, and field-driven particles immersed in the thermomeltable material, so that the particles change optical densities in response to an applied electric field when the thermomeltable material is above the transition temperature range and is stable at temperatures below the transition temperature range. An array of electrodes selectively applies electric fields at an image forming position on the receiver. The apparatus heats the receiver to control the temperature of the receiver so as to control the response of the field-driven particles in the receiver.

US 6 400 571 describes an electronic equipment housing usable for various types of electronic equipment. The housing is formed by adhesively bonding two or more plate-like members, differing in thickness from one another. The housing can efficiently radiate heat from heating parts, can prevent air bubbles from occurring in an adhesive between plate-like members, can reduce time required to produce the electronic equipment housing and can properly control heat conduction.

The present invention seeks to provide means for reducing or eliminating non-uniform heating of an electro-optic medium caused by heat generating components disposed adjacent the medium.

Accordingly, this invention provides an electro-optic display comprising:
a layer of reflective electro-optic material capable of changing its optical state on application of an electric field thereto;
at least one electrode arranged to apply an electric field to the layer of electro-optic material;
a heat generating component in heat conducting relationship with the layer of electro-optic material; and
a heat shield disposed between the heat generating component and the layer of electro-optic material, the heat shield comprising a layer of thermally insulating material and a layer of thermally conducting material, the layer of thermally conducting material being disposed between the layer of thermally insulating material and the layer of electro-optic material, an air gap (110) being present between the electrode and the layer of thermally conducting material (106).

As discussed in more detail below, in one preferred form of this electro-optic display, the heat shield comprises a printed circuit board having a conductive layer therein. The heat shield may comprise a plurality of layers of thermally insulating material and a plurality of layers of thermally conducting material, the layers of thermally insulating material alternating with the layers of thermally conducting material, and one layer of thermally conducting material being disposed between the layers of thermally insulating material and the layer of electro-optic material. Also, in the electro-optic display of the present invention, it is desirable that the layer of thermally insulating material and the layer of thermally conducting material extend across the whole area of the layer of electro-optic material. The heat shield may comprise a polymeric film having a metal layer formed thereon; for example, the heat shield may have the form of an aluminized film.

In some cases, the structure of the heat generating component may itself provide the layer of thermally insulating material; for example, the heat generating component could be a battery pack having a polymeric casing which can serve as the layer of thermally insulating material. In such cases, the present invention can be practiced simply by providing a layer of thermally conducting material between the heat generating component and the layer of electro-optic material.

The heat shield of the present invention may be used with any type of reflective electro-optic material. Thus, for example, the electro-optic medium may be a rotating bichromal member material or an electrochromic material. Alternatively, the electro-optic material may be an electrophoretic material. For example, the electrophoretic material may be of the encapsulated type and comprise at least one capsule having a capsule wall encapsulating a suspending fluid and a plurality of electrically charged particles suspended in the suspending fluid and capable of moving therethrough on application of an electric field to the electrophoretic material. Alternatively, the electrophoretic material may be of the microcell type and comprise a substrate having a plurality of closed cells formed therein, each of the cells having therein a suspending fluid and a plurality of electrically charged particles suspended in the suspending fluid and capable of moving therethrough on application of an electric field to the electrophoretic material.

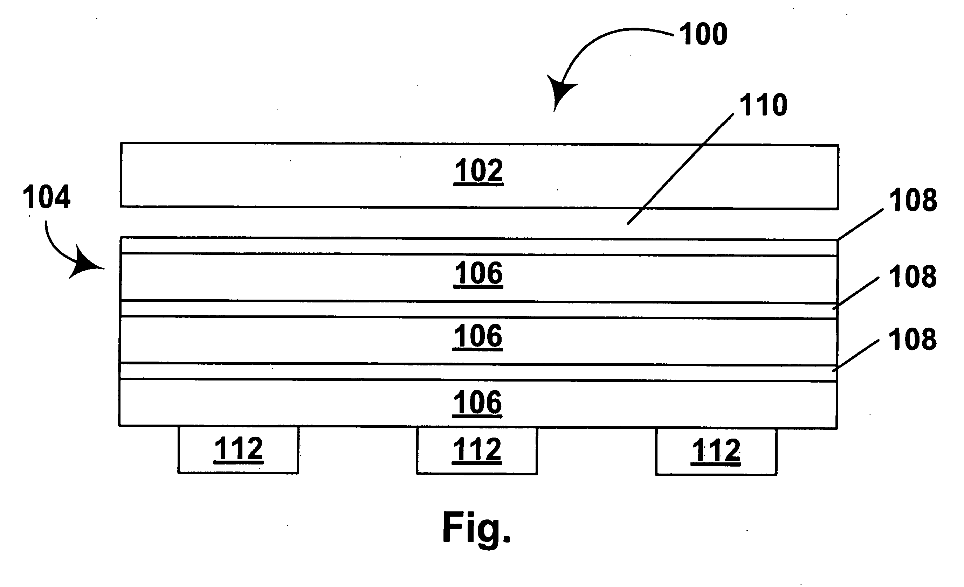

The sole Figure of the accompanying drawings is a schematic side elevation of a preferred embodiment of an electro-optic display of the present invention which makes use of multilayer printed circuit boards to provide a heat shield.

As already mentioned, this invention provides an electro-optic display having a heat shield disposed between a heat generating component and a layer of electro-optic material, this heat shield comprising a layer of thermally insulating material and a layer of thermally conducting material disposed between the layer of thermally insulating material and the layer of electro-optic material.

The heat generating component of the present electro-optic display may be of any known type. The component may be, for example an alternating current/direct current conversion component, such as a transformer, or another type of power supply or battery; all batteries generate some heat because of their internal resistance. The component may also be a resistor, inductor, microprocessor, or a memory component. Obviously, multiple heat generating components may be present; for example, a display intended to operate from either an internal battery or mains will typically include a transformer, a battery and a microprocessor as heat generating components.

Although one cannot eliminate heat generation in an electro-optic display in which it is necessary to mount heat generating electrical components adjacent the electro-optic medium, one can minimize the extent that the heat generated by such components distorts the image displayed on the medium. As already indicated, distortions arising from local concentrations of heat generation that cause the temperature of the electro-optic medium to vary between adjacent regions of the display tend to be more troublesome than variations caused by uniform temperature changes, because the human eye is more sensitive to variations in image quality between different regions of a display than to variations which are uniform across the entire display. By incorporating a heat shield of the present invention, one "homogenizes" the temperature variations within the display due to non-uniform distribution of heat-generating electronic components and the display medium experiences a more uniform temperature, thus largely eliminating image variations within the display due to such non-uniform temperatures. The heat shield is especially effective in removing sharp gradients in temperature which are particularly noticeable to the eye. The heat shield of the present invention also serves to reduce the overall amount of heat reaching the display medium and thus further reduces thermal distortions of the image displayed.

As is well known to those skilled in the technology of heat shields, such shields are often constructed solely from insulating material; for example, many types of simple thermal insulators rely upon a porous medium to achieve low thermal conductivity, but these types of insulators tend to be bulky and are thus unsuitable for use in small, portable electronic devices in which electro-optic displays are often used. Use of such an "insulator only" heat shield in an electro-optic display does reduce the total amount of heat reaching the electro-optic medium from heat-generating electronic components, but allows substantial temperature differences to persist between different areas of the display. By using a heat shield of the present invention comprising both an insulating layer and a thermally conductive layer, one can achieve a much more homogeneous temperature distribution within the display, and consequently a much more uniform image.

The heat shield used in the present invention can be a discrete, purpose built component of the display provided solely for its heat shielding function. However, since for reasons of cost it is obviously desirable to minimize the number of discrete components needed in such a display, it is generally preferred to provide the thermally insulating and conductive layers of the heat shield using materials which also serve other functions. In particular, a preferred embodiment of the invention takes advantage of the properties of circuit boards which are typically present in electro-optic displays for mounting of the electronic components of such displays. Such circuit boards are often constructed using a fiberglass/epoxy composite material to give stiffness, and this fiberglass/epoxy composite material is a thermal insulator. However, most modem circuit boards use a multilayer circuit design, and such designs typically include ground or constant voltage planes to minimize electrical noise. These ground planes are usually formed from copper or gold plate, both of which are excellent thermal conductors. Thus, if a multilayer circuit board having a insulating layer such as a fiberglass/epoxy composite and a ground plane formed from a thermally conductive metal is arranged within an electro-optic display so as to lie parallel to the layer of electro-optic material, with its ground plane facing this material, such a multilayer circuit board can serve as a heat shield of the present invention.

The Figure is a schematic side elevation of a preferred embodiment of the present invention which makes use of multilayer circuit boards in this manner. This Figure shows a display (generally designated 100) having a layer of electro-optic material 102; this layer 102 is sandwiched between two sets of electrodes, which are omitted from the Figure for ease of comprehension. The display 100 further comprises three circuit boards 104, each of which has a fiberglass/epoxy composite layer 106 and a ground plane 108, each board 104 being arranged so that its ground plane 108 is on the side facing the layer of electro-optic material 102. The board 104 closest to the layer 102 is separated therefrom by an air gap 110; this air gap can if desired by replaced by an insulating layer. Heat generating components 112 are arranged on the opposed side of the circuit boards 104 from the electro-optic layer 102.

The alternating insulating and conductive layers provided by the circuit boards 104 shown in the Figure are highly effective in maintaining a constant temperature across the whole area of the electro-optic layer 102 despite the localized heat generation by the heat generating components 112.

As indicated in the Figure, the circuit boards 104 extend across the whole area of the electro-optic layer 102. While the extent of the circuit boards 104 may not be required to house the necessary electronics, it is undesirable to terminate the circuit boards 104 short of the boundaries of the electro-optic layer 102, since to do so risks causing significant thermal gradients at the boundaries of the circuit boards 104, and consequent highly visible variations in the image displayed.

In cases where it is not convenient to use printed circuit boards as the heat shield, several alternative types of material may be employed. In particular, polymeric films coated with thin layers of metal are suitable for use as heat shields. Such materials are available commercially, for example the material known as "aluminized Mylar" ("MYLAR" is a registered trade mark) from E.I. du Pont de Nemours & Company, Wilmington, Delaware, United States of America; this material comprises a thin layer of aluminum on a polyethylene terephthalate base. Metallized films have the advantage of flexibility, so that they can be fitted around non-planar components when necessary. Multiple thicknesses of metallized films can be used to produce a structure similar to that shown in the Figure, with multiple alternating insulating and conductive layers.

As already indicated, the electro-optic display of the present invention may make use of any of the aforementioned types of reflective electro-optic material. Apart from the provision of the heat shield in accordance with the present invention, the preferred materials and structures for the electro-optic material are unchanged, and for further details the reader is referred to the various patents and applications mentioned above.

## Claims

1. An electro-optic display (100) comprising:
a layer of reflective electro-optic material (102) capable of changing its optical state on application of an electric field thereto;
at least one electrode arranged to apply an electric field to the layer of electro-optic material (102); and
a heat generating component (112) in heat conducting relationship with the layer of electro-optic material (102),
the display (100) being **characterized by** a heat shield (104) disposed between the heat generating component (112) and the layer of electro-optic material (102), the heat shield (104) comprising a layer of thermally insulating material (106) and a layer of thermally conducting material (108), the layer of thermally conducting material (108) being disposed between the layer of thermally insulating material (106) and the layer of electro-optic material (102), an air gap (110) being present between the electrode and the layer of thermally conducting material (106).

2. An electro-optic display according to claim 1 wherein the heat shield (104) comprises a printed circuit board having a conductive layer (108) therein.

3. An electro-optic display according to claim 1 or 2 wherein the heat shield (104) comprises a plurality of layers of thermally insulating material (106) and a plurality of layers of thermally conducting material (108), the layers of thermally insulating material (106) alternating with the layers of thermally conducting material (108), and one layer of thermally conducting material (108) being disposed between the layers of thermally insulating material (106) and the layer of electro-optic material (102).

4. An electro-optic display according to any one of the preceding claims wherein the layer of thermally insulating material (106) and the layer of thermally conducting material (108) extend across the whole area of the layer of electro-optic material (102).

5. An electro-optic display according to any one of the preceding claims wherein the heat shield comprises a polymeric film having a metal layer formed thereon.

6. An electro-optic display according to any one of the preceding claims wherein the electro-optic material (102) comprises a rotating bichromal member material or an electrochromic material.

7. An electro-optic display according to any one of claims 1 to 5 wherein the electro-optic material (102) comprises an electrophoretic material.

8. An electro-optic display according to claim 7 wherein the electrophoretic material comprises at least one capsule having a capsule wall encapsulating a suspending fluid and a plurality of electrically charged particles suspended in the suspending fluid and capable of moving therethrough on application of an electric field to the electrophoretic material.

9. An electro-optic display according to claim 7 wherein the electrophoretic material comprises a substrate having a plurality of closed cells formed therein, each of the cells having therein a suspending fluid and a plurality of electrically charged particles suspended in the suspending fluid and capable of moving therethrough on application of an electric field to the electrophoretic material.

## Patentansprüche

1. Elektrooptische Anzeige (100), die Folgendes umfasst:
eine Schicht eines reflektierenden elektrooptischen Materials (102), die dann, wenn an sie ein elektrisches Feld angelegt wird, ihren optischen Zustand ändern kann;
wenigstens eine Elektrode, die zum Anlegen eines elektrischen Felds an die Schicht eines elektrooptischen Materials (102) ausgelegt ist; und
eine Wärme erzeugende Komponente (112) in Närmeleitungsbeziehung mit der Schicht eines elektrooptischen Materials (102),
wobei die Anzeige (100) **dadurch gekennzeichnet ist, dass** zwischen der Wärme erzeugenden Komponente (112) und der Schicht eines elektrooptischen Materials (102) ein Wärmeschutz (104) angeordnet ist, wobei der Wärmeschutz (104) eine Schicht eines wärmeisolierenden Materials (106) und eine Schicht eines wärmeleitenden Materials (108) umfasst, wobei die Schicht eines wärmeleitenden Materials (108) zwischen der Schicht eines wärmeisolierenden Materials (106) und der Schicht eines elektrooptischen Materials (102) angeordnet ist, wobei zwischen der Elektrode und der Schicht eines wärmeleitenden Materials (106) ein Luftspalt (110) vorhanden ist.

2. Elektrooptische Anzeige nach Anspruch 1, wobei der Wärmeschutz (104) eine Leiterplatte umfasst, in der eine leitende Schicht (108) vorgesehen ist.

3. Elektrooptische Anzeige nach Anspruch 1 oder 2, wobei der Wärmeschutz (104) mehrere Schichten eines wärmeisolierenden Materials (106) und mehrere Schichten eines wärmeleitenden Materials (108) umfasst, wobei die Schichten eines wärmeisolierenden Materials (106) mit den Schichten eines wärmeleitenden Materials (108) abwechseln und wobei eine Schicht eines wärmeleitenden Materials (108) zwischen den Schichten eines wärmeisolierenden Materials (106) und der Schicht eines elektrooptischen Materials (102) angeordnet ist.

4. Elektrooptische Anzeige nach einem der vorhergehenden Ansprüche, wobei die Schicht eines wärmeisolierenden Materials (106) und die Schicht eines wärmeleitenden Materials (108) über den gesamten Bereich der Schicht eines elektrooptischen Materials (102) verlaufen.

5. Elektrooptische Anzeige nach einem der vorhergehenden Ansprüche, wobei der Wärmeschutz eine Polymerlage umfasst, auf der eine Metallschicht ausgebildet ist.

6. Elektrooptische Anzeige nach einem der vorhergehenden Ansprüche, wobei das elektrooptische Material (102) ein Material eines rotierenden bichromalen Glieds oder ein elektrochromes Material umfasst.

7. Elektrooptische Anzeige nach einem der Ansprüche 1 bis 5, wobei das elektrooptische Material (102) ein elektrophoretisches Material umfasst.

8. Elektrooptische Anzeige nach Anspruch 7, wobei das elektrophoretische Material wenigstens eine Kapsel umfasst, die eine Kapselwand aufweist, die ein Suspensionsfluid und mehrere elektrisch geladene Teilchen, die in dem Suspensionsfluid suspendiert sind und sich bei Anlegen eines elektrischen Felds an das elektrophoretische Material dadurch bewegen können, kapselt.

9. Elektrooptische Anzeige nach Anspruch 7, wobei das elektrophoretische Material ein Substrat umfasst, das mehrere darin ausgebildete geschlossene Zellen aufweist, wobei in jeder der Zellen ein Suspensionsfluid und mehrere elektrisch geladene Teilchen, die in dem Suspensionsfluid in Suspension sind und sich bei Anlegen eines elektrischen Felds an das elektrophoretische Material dadurch bewegen können, vorgesehen sind.

## Revendications

1. Affichage électro-optique (100) comportant :
une couche de matériau électro-optique réfléchissant (102) capable de changer d'état optique suite à l'application d'un champ électrique à celui-ci ;
au moins une électrode disposée de façon à appliquer un champ électrique à la couche de matériau électro-optique (102) ; et
un composant générateur (112) de chaleur en relation de conduction de chaleur avec la couche de matériau électro-optique (102),
l'affichage (100) étant **caractérisé par** un écran thermique (104) disposé entre le composant générateur (112) de chaleur et la couche de matériau électro-optique (102), l'écran thermique (104) comportant une couche de matériau thermiquement isolant (106) et une couche de matériau thermiquement conducteur (108), la couche de matériau thermiquement conducteur (108) étant disposée entre la couche de matériau thermiquement isolant (106) et la couche de matériau électro-optique (102), un entrefer (110) étant présent entre l'électrode et la couche de matériau thermiquement conducteur (106).

2. Affichage électro-optique selon la revendication 1, l'écran thermique (104) comportant une carte à circuit imprimé contenant une couche conductrice (108).

3. Affichage électro-optique selon la revendication 1 ou 2, l'écran thermique (104) comportant une pluralité de couches de matériau thermiquement isolant (106) et une pluralité de couches de matériau thermiquement conducteur (108), les couches de matériau thermiquement isolant (106) alternant avec les couches de matériau thermiquement conducteur (108), et une couche de matériau thermiquement conducteur (108) étant disposée entre les couches de matériau thermiquement isolant (106) et la couche de matériau électro-optique (102).

4. Affichage électro-optique selon l'une quelconque des revendications précédentes, la couche de matériau thermiquement isolant (106) et la couche de matériau thermiquement conducteur (108) s'étendant sur toute la superficie de la couche de matériau électro-optique (102).

5. Affichage électro-optique selon l'une quelconque des revendications précédentes, l'écran thermique comportant un film polymérique sur lequel est formée une couche métallique.

6. Affichage électro-optique selon l'une quelconque des revendications précédentes, le matériau électro-optique (102) comportant un matériau de composant bichromatique de rotation ou un matériau électrochromique.

7. Affichage électro-optique selon l'une quelconque des revendications 1 à 5, le matériau électro-optique (102) comportant un matériau électrophorétique.

8. Affichage électro-optique selon la revendication 7, le matériau électrophorétique comportant au moins une capsule dotée d'une paroi de capsule enveloppant un fluide de suspension et une pluralité de particules électriquement chargées suspendues dans le fluide de suspension et capables de se déplacer à travers celui-ci suite à l'application d'un champ électrique au matériau électrophorétique.

9. Affichage électro-optique selon la revendication 7, le matériau électrophorétique comportant un substrat dans lequel est formée une pluralité de cellules fermées, chacune des cellules contenant un fluide de suspension et une pluralité de particules électriquement chargées suspendues dans le fluide de suspension et capables de se déplacer à travers celui-ci suite à l'application d'un champ électrique au matériau électrophorétique.
